Europäisches Patentamt

European Patent Office

Office européen des brevets

(19)

(11) Publication number: **0 164 993**
A2

(12) # EUROPEAN PATENT APPLICATION

(21) Application number: 85303926.1

(22) Date of filing: 04.06.85

(51) Int. Cl.⁴: **G 02 B 6/38**
**H 01 R 13/66**

(30) Priority: 08.06.84 GB 8414650

(43) Date of publication of application:
18.12.85 Bulletin 85/51

(84) Designated Contracting States:
DE FR GB IT SE

(71) Applicant: LUCAS INDUSTRIES public limited company
Great King Street
Birmingham, B19 2XF West Midlands(GB)

(72) Inventor: Fry, William Lawrence
16 Sabrina Drive
Bewdley BY12 2RJ(GB)

(72) Inventor: Hayes, Alan
604 High Street
Sandyford Stoke on Trent Staffs(GB)

(74) Representative: Carpenter, David et al,
Marks & Clerk Alpha Tower Suffolk Street Queensway
Birmingham B1 1TT(GB)

(54) Electrical & fibre optic connector.

(57) A connector for making an optical connection and an electrical connection comprising first and second interengageable connector parts (11, 12) the first connector part (11) including a first body (14) having an end face at which a connection end or a first optical fibre (16) is exposed, and a first enlongated sleeve (13) within which said first body (14) is housed as a close fit, said first sleeve (13) exending beyond said end face of said first body (14), the second connector part including a second body having an end face at which a connection end of a second optical fribre (26) is exposed, and a second elongated sleeve (23) within which said second body (24) is housed, the second sleeve (23) extending beyond said end face of the second body (24). The dimensions of the first and second sleeves (13, 23) are such that upon interengagement of the connector parts the first sleeve (13) is received as a close sliding fit within the second sleeve (23), and, the dimensions of the first sleeve (13) and the second body (24) are such that as the first sleeve (13) is received as a close sliding fit in the second sleeve (23), the second body (24) is received as a close sliding fit in the first sleeve (13) whereby said end faces of said first and second bodies (14, 24) can be brought into abutment accurately to align the exposed connection ends of their respective first and second optical fibres (16, 26) the first and second sleeves (13, 23) and/or the first and second bodies (14, 24) being electrically conductive.

FIG. 2.

EP 0 164 993 A2

"CONNECTOR FOR MAKING ELECTRICAL AND OPTICAL CONNECTIONS"

This invention relates to a two part connector, which, when the two connector parts are interengaged, makes an electrical connection between a pair of electrical conductors, and at the same time makes an optical connection between a pair of optical fibres.

The term "optical fibre" as used herein is intended to cover both a single light conductor, and a bundle of light conductive fibres of the kind sometimes known as an optical cable.

European Patent Application 0095254 illustrates a known electrical and optical connector which while having the benefit of structural simplicity, suffers from the disadvantage that the connection end of one of the optical fibres is unprotected when the two parts of the connector are disengaged. Moreover in the construction disclosed in European Patent Application 0095254 the two optical fibres are received, when the connection between the fibres is made, in two different diameter regions of the stepped tubular member 6. By virtue of being received in different diameter regions it is possible for misalignment of the fibres to occur as a result of inaccuracies in the manufacture of the tubular members with two regions of different diameter. It is an object of the present invention to provide in a simple and convenient form, a connector for making an electrical connection and an optical connection and wherein the above disadvantages are minimised.

A connector according to the invention includes first and second interengageable connector parts, the first connector part comprising a first body having an end face at which a connection end of a first optical fibre is exposed, and a first elongate sleeve within which said first body is housed as a close fit, said first sleeve extending beyond said end face of said first body, the second connector part comprising a second body having an end face at which a connection end of a second optical fibre is exposed, and a second elongate sleeve within which said second body is housed, the second sleeve extending beyond said end face of the second part, the dimensions of said first and second sleeves being such that upon interengagement of the connector parts the first sleeve is received as a close sliding fit within the second sleeve, and, the dimensions of the first sleeve and the second body being such that as the first sleeve is received as a close sliding fit in the second sleeve, the second body is received as a close sliding fit in the first sleeve whereby said end faces of said first and second bodies can be brought into abutment accurately to align the exposed connection ends of their respective first and second optical fibres, the first and second sleeves and/or the first and second bodies being electrically conductive.

Preferably the connector includes means positively retaining the connector parts in an interengaged condition.

Desirably said means retaining the connector parts in an interengaged condition includes an external housing.

Conveniently said housing is formed in first and second interengageable parts, a first housing part carrying the first connector part, and a second housing part carrying the second connector part, the first and second housing parts having mating latch means which latch together when the first and second connector parts are fully interengaged, and so resist withdrawal of the first connector part from the second connector part.

Preferably each of said first and second bodies is slidable axially within its respective sleeve between predetermined limits, and each connector part includes a spring urging its respective body towards the mating end of its respective sleeve and abutment means limiting such movement of the body such that in the limit position the respective sleeve still extends beyond said end face of the respective body.

Preferably one, or both, of said first and second bodies is moved relative to its respective sleeve against the action of its respective spring by fully interengaging the first and second connector parts.

Preferably said first and second bodies each include an outer cylindrical surface concentric with the connection end of their respective optical fibre, said cylindrical surfaces engaging the inner surface of said first sleeve so that said first and second bodies are guided by the first sleeve, when the connector parts are interengaged.

Desirably said first and second sleeves are electrically conductive, and each includes a crimpable extension whereby electrical and physical connections can be made to respective first and second electrical conductors.

One example of the invention is illustrated in the accompanying drawings, wherein:

Figure 1 is a side elevational view of an optical and electrical connector,
Figure 2 is a sectional view on the line 2-2 in Figure 1; and

Figure 3 is an end view of a component seen in section in Figure 2.

Referring to the drawings, the electrical connector includes a first connector part 11 and a second connector part 12. The first connector part 11 includes an accurately cylindrical metal sleeve 13 of circular cross-section having an enlargement 13a at one end thereof. Positioned as a close sliding fit within the cylindrical region of the sleeve 13 is an elongate body 14 having an outer cylindrical surface 15 engaging the inner surface of the sleeve 13. The body 14 is conveniently formed from synthetic resin material, and has a centrally disposed axially extending bore within which is secured an optical fibre 16. The optical fibre 16 can be a single light conductive fibre, or can be a bundle of light conductive fibres of the kind sometimes known as an optical cable. One end of the fibre 16 is exposed at the axial end of the body 14 which is presented to the end of the sleeve 13 remote from the enlarged region 13a. The cut end of the fibre 16, which constitutes the connection end of the fibre, may be ground and polished, and is accurately concentrical with the cylindrical region 15 of the body 14. The body 14 includes a reduced diameter region 14a which is slidably received in a boss 17 in the enlarged region 13a of the sleeve. A helically wound compression spring 18 encircles the region 14a between the boss 17 and the cylindrical portion 15 and urges the body 14 towards the end of the sleeve 13 remote from the region 13a. However, at the free end of the region 14a there is provided a protrusion 14b which abuts the boss 17 to limit movement of the body 14 relative to the sleeve 13 under the action of the spring 18. In the limit position of the body 14, wherein the protrusion 14b abuts the boss 17, the connection end of the fibre 16 is still well within the sleeve 13, the sleeve 13 thus protruding beyond the connection end of the fibre 16 to provide protection therefor.

The construction of the connector part 12 is similar to that described above with reference to the connector part 11 with the principle exception that the metal sleeve 23 of the connector part 12 has an internal diameter substantially equal to the external diameter of the sleeve 13 so that the sleeve 13 can be received as a close sliding fit within the sleeve 23. The end of the sleeve 23 remote from the enlarged region 23a is belled outwardly at 23b to facilitate introduction of the sleeve 13 into the sleeve 23. The body 24 of the connector part 12 is substantially identical to the body 14 of the connector part 11 in particular in that it has a cylindrical outer surface 25 of diameter equal to the cylindrical outer surface 15 of the body 14, and in that the connection end of its optical fibre 26 is accurately concentric with the cylindrical surface 25. The enlarged region 23a of the sleeve 23 houses a boss 27 within which the reduced diameter region 24a of the body 24 is slidable. A helically wound compression spring 28 acts between the body 24 and the boss 27 to urge the body 24 towards the belled end 23b of the sleeve 23 and the body region 24a has a protrusion 24b which limits movement of the body 24 relative to the sleeve 23 under the action of the spring 28 such that in the limit position of the movement of the body 24 the ground and polished end of the fibre 26 is still well within the sleeve 23 and so is protected thereby.

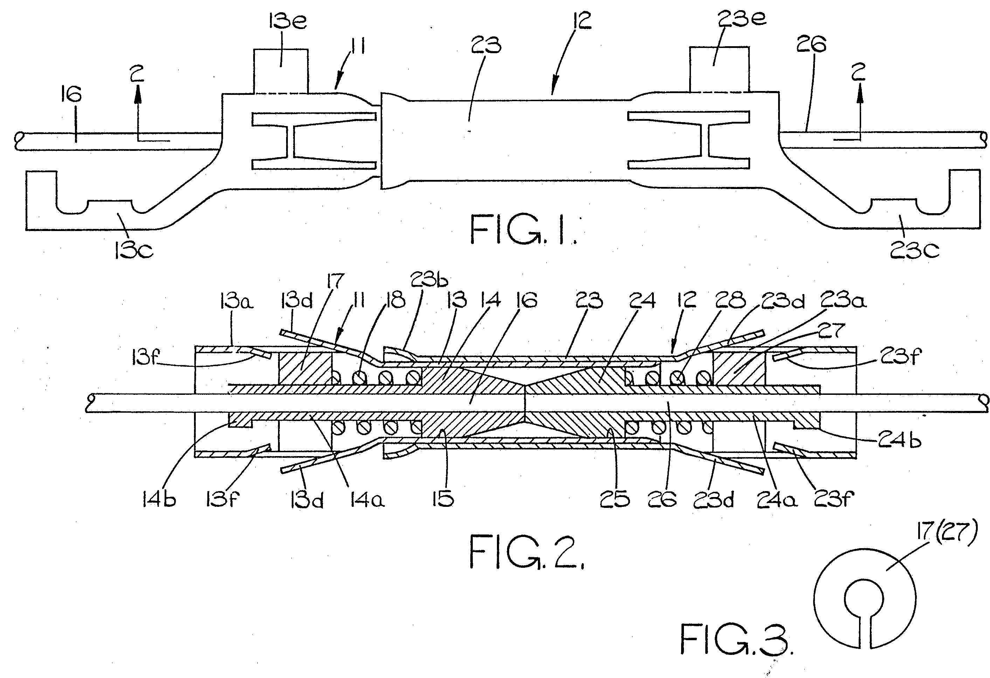

As is apparent in Figure 1 each of the sleeves 13, 23 includes an integral extension indicated by the suffix c having crimpable tags whereby a physical and electrical connection can be achieved between each sleeve 13, 23 and a respective electrical conductor.

In order to make an electrical connection between the conductors of the connector parts 11, 12 and at the same time make an optical connection between the optical fibres 16, 26 of the connector parts 11, 12, the free end of the sleeve 13 of the connector part 11, that is to say the end of the sleeve remote from the extension 13c, is inserted into the belled end 23b of the sleeve 23 and the connector parts 11, 12 are pressed together so that the sleeve 13 slides into the sleeve 23. As the sleeve 13 slides into the sleeve 23 it engages over the body 24 so that the body 24 slides into the sleeve 13. The connector part 11 is pushed into the connector part 12 until the sleeve 13 is fully received within the sleeve 23. At some point during this movement the front end face of the body 14 is engaged by the front end face of the body 24, and since both the body 14 and the body 24 have accurately cylindrical outer surfaces which are in sliding engagement with the same accurately cylindrical sleeve 13, and since the connection ends of the fibres 16 and 26 are accurately concentric with the cylindrical regions 15, 25 of their respective bodies 14, 24 then the connection ends of the fibres 16, 26 will be accurately aligned and in facial abutment when the bodies 14, 24 abut. It will be recognised that accurate alignment of the connection ends of the fibres 16, 26 is essential in order to ensure maximum light transmission between the fibres 16 and 26. If the connection ends of the fibres 16, 26 were offset from one another so as only partially to overlap, then of course there would be a loss of light transmission capability. However, the use of substantially identical bodies 14, 24 sliding within a common accurately cylindrical sleeve 13, ensures accuracy of alignment of the fibres 16, 26 in a simple and convenient manner. It is desirable that the bodies 14, 24 abut before the full travel of the sleeve 13 into the sleeve 23 is achieved so that the final sliding movement of the sleeve 13 into the sleeve 23 is accompanied by compression of one or both of the springs 18, 28, so that in the final position of the sleeve 13 relative to the sleeve 23 the bodies 14, 24 are spring urged into abutment. It will of course be recognised that the sliding fit of the sleeve 13 in the sleeve 23 ensures a good electrical connection between the sleeves, and thus between the conductors connected to the extensions 13c, 23c.

In practice there will be a latching arrangement which secures the connector parts 11, 12 together in their fully interengaged condition. Thus there will be no danger that the springs 18, 28 will push the connector parts 11, 12 apart. A convenient method of providing the latching arrangement is to mount each connector part 11, 12 in a respective external housing part, conveniently a moulded synthetic resin housing part, the housing parts being arranged such that latch means thereon interengage when the connector parts 11, 12 are fully interengaged. The enlarged regions 13a, 23a of the connector parts are provided with resilient lances 13d, 23d for latching the connector parts into respective moulded synthetic resin housing parts. Moreover, each of the connector parts is provided with a radially outwardly projecting, axially extending tag 13e, 23e which serves to align its respective connector part within the associated housing part, and to co-operate with a locking bar of the housing part to ensure that the connector part is locked into the correct position in its respective housing part.

It will be recognised that the connector parts 11, 12 may be received within moulded synthetic resin housing parts in the same manner as conventional electrical terminals are received in the moulded synthetic resin housing parts of a conventional electrical connector, for example a plug and socket type connector.

The connector parts 11, 12 are arranged so that they can be assembled to electrical conductors and fibres 16, 26 which are already parts of a preconstructed wiring harness. The fibres 16, 26 may be provided with their bodies 14, 24 before incorporation of the fibres into the harness, or can be provided with the bodies 14, 24 immediately before construction of the connector parts 11, 12. The latter arrangement is preferred, since it is necessary to position the spring 18, 28 on the fibre 16, 26 or the body region 14a, 24a immediately before securing the body to its respective fibre. The presence of bodies, and springs could prove troublesome during the construction of the harness.

Each boss 17, 27 is, as shown in Figure 3, provided with a radial split so that it can be sprung open to be snapped over the reduced diameter region 14a, 24a of its respective body. The sub-assembly of the fibre, body, spring, and boss is then introduced into its respective sleeve from the enlarged end of the sleeve and is pushed into the sleeve until the boss slides passed inwardly inclined fingers (indicated by the suffix f) of the respective sleeve. It will be understood that the fingers 13f, 23f are displaced outwardly by the respective boss and then spring back behind the boss to resist withdrawal thereof. Thus each boss is trapped between its respective fingers and the narrower region of its respective sleeve. Each connector part 11, 12 so formed can then be snapped into engagement with its respective housing part. Thus connector parts can be assembled to the ends of conductors and optical fibres which have already been incorporated into a wiring harness thereby avoiding the complexity of manufacturing, and even installing, a wiring harness with the connector parts already in position.

**0164993**

CLAIMS.

1.    A connector for making an optical connection and an electrical connection comprises first and second interengageable connector parts (11, 12) and is charactorized in that said first connector part (11) includes a first body (14) having an end face at which a connection end of a first optical fibre (16) is exposed, and a first elongate sleeve (13) within which said first body (14) is housed as a close fit, said first sleeve (13) extending beyond said end face of said first body (14), the second connector part includes a second body (24) having an end face at which a connection end of a second optical fibre (26) is exposed, and a second elongate sleeve (23) within which said second body (24) is housed, the second sleeve (23) extending beyond said end face of the second body (24), the dimensions of said first and second sleeves (13, 23) being such that upon interengagement of the connector parts the first sleeve (13) is received as a close sliding fit within the second sleeve (23), and, the dimensions of the first sleeve (13) and the second body (24) being such that as the first sleeve (13) is received as a close sliding fit in the second sleeve (23), the second body (24) is received as a close sliding fit in the first sleeve (13) whereby said end faces of said first and second bodies (14, 24) can be brought into abutment accurately to align the exposed connection ends of their respective first and second optical fibres (16, 26) the first and second sleeves (13, 23) and/or the first and second bodies (14, 24) being electrically conductive.

2.    A connector as claimed in claim 1 charactorized by the provision of means retaining the connector parts (11, 21) interengaged.

3.　　A connector as claimed in claim 2 characterized in that said means includes an external housing.

4.　　A connector as claimed in claim 8 characterized in that said housing is formed in first and second interengageable parts, a first housing part carrying the first connector part (11), and a second housing part carrying the second connector part (12), the first and second housing parts having mating latch means which latch together when the first and second connector parts (11, 12) are fully interengaged, and so resist withdrawal of the first connector part (11) from the second connector part (12).

5.　　A connector as claimed in any one of claims 1 to 4 characterized in that each of said first and second bodies (14, 24) is slidable axially within its respective sleeve (13, 23) between predetermined limits, and each connector part includes a spring (18, 28) urging its respective body (14, 24) towards the mating end of its respective sleeve (13, 23) and abutment means (14b, 17; 24b, 27) limiting such movement of the body such that in the limit position the respective sleeve still extends beyond said end face of the respective body.

6.　　A connector as claimed in claim 5 characterized in that one, or both, of said first and second bodies (14, 24) is moved relative to its respective sleeve (13, 23) against the action of its respective spring (18, 28) by fully interengaging the first and second connector parts (11, 12).

7.　　A connector as claimed in any one of the preceding claims characterized in that said first and second bodies (14, 24) each include an outer cylindrical surface (15, 25) concentric with the connection end of their respective optical fibre (16, 26), said cylindrical surfaces (15, 25) engaging the inner surface of said first sleeve (13) so that said first and second bodies (14, 24) are guided by the first sleeve (13), when the connector parts (11, 12) are interengaged.

8. A connector as claimed in any one of the preceding claims charactorized in that said first and second sleeves (13, 23) are electrically conductive, and each includes a crimpable extension (13a, 23a) whereby electrical and physical connections can be made to respective first and second electrical conductors.

FIG.1.

FIG.2.

FIG.3.

17(27)

1/1

0164993